# FASCICULE DE BREVET EUROPEEN

(11) **EP 0 549 447 B1**
(45) Date de publication et mention de la délivrance du brevet: **06.09.1995**
(21) Numéro de dépôt: 92403495.2
(22) Date de dépôt: 21.12.1992
(51) Int. Cl.: B65G 57/30, B65G 59/06

(54) **Dispositif pour le levage d'une charge disposée sur un convoyeur**
Vorrichtung zum Heben eines auf einem Förderer ruhenden Gegenstandes
Device for lifting a load resting on a conveyor

(30) Priorité: 23.12.1991 FR 9116030
(43) Date de publication de la demande: 30.06.1993
(73) Titulaire: GEC ALSTHOM SYSTEMES ET SERVICES SA, 75116 Paris (FR)
(72) Inventeur: Gernez, Alain, F-45100 Orléans (FR)
(74) Mandataire: Gosse, Michel

(56) Documents cités:
- AT-A- 338 171
- US-A- 3 038 615
- US-A- 3 190 466

## Description

La présente invention concerne un dispositif pour le levage d'une charge disposée sur un convoyeur.

On connaît un tel système de levage utilisant une plateforme disposée entre les longerons d'un convoyeur, la plateforme étant équipée à ses quatre angles d'une colonne et les quatre colonnes étant réunies à leur extrémité supérieure par des traverses. Une chaîne est fixée à chaque angle du plateau et les quatre chaînes passent sur des pignons de renvoi liées au convoyeur qui supporte également le système de motorisation. Le soulèvement du plateau par la traction des chaînes permet ainsi de soulever la charge, par exemple une palette, chargée ou non, disposée sur le convoyeur et prise par l'extrémité supérieure des quatre colonnes. En position basse du plateau, l'extrémité supérieure des quatre colonnes est bien entendu située à un niveau inférieur à celui des éléments d'entraînement du convoyeur : chaînes ou rouleaux. Ce système à quatre chaînes pendantes auxquelles est accrochée une plateforme garantit bien l'horizontalité de la plateforme dans toutes ses positions.

Cependant, ce système nécessite un lest de la plateforme et un convoyeur non standard comportant un système de motorisation spécial et des pignons de renvoi.

La présente invention a pour but de proposer un dispositif simple et permettant de conserver un convoyeur standard tout en conservant les avantages du dispositif à quatre chaînes.

L'invention a ainsi pour objet un dispositif pour le levage d'une charge disposée sur un convoyeur, ledit convoyeur comportant deux longerons, parallèles à la direction d'entraînement du convoyeur et supportant des organes d'entraînement des charges déposées, le dispositif de levage comprenant une plateforme située entre les deux dits longerons et équipée d'une architecture de rehaussement destinée à supporter ladite charge à élever et dont l'extrémité supérieure, dans la position basse de la plateforme, est située à un niveau inférieur à celui desdits organes d'entraînement, ladite plateforme étant reliée audit convoyeur par quatre chaînes auxquelles elle est suspendue, caractérisé en ce que une extrémité de chaque chaîne est fixée à un longeron du convoyeur et en ce que l'autre extrémité de chaque chaîne est fixée à un pignon menant, les pignons menants étant accouplés à des moyens moteurs, l'ensemble pignons et moyens moteurs étant supporté par ladite plateforme.

Selon une réalisation préférée, les quatre pignons menants sont montés sur un unique arbre moteur situé à l'avant de la plateforme perpendiculairement à la direction desdits longerons, ledit arbre portant à chacune de ses extrémités deux dits pignons menants à chacun desquels est accrochée une chaîne dont l'une subit un simple trajet vertical et vient s'accrocher au longeron correspondant et dont l'autre subit un premier parcours horizontal parallèle aux longerons pour passer sur un pignon de renvoi situé à l'arrière de la plateforme puis de là un deuxième parcours vertical pour venir s'accrocher au longeron, la chaîne, le long de son parcours horizontal reposant sur le fond de la plateforme, sur un chemin de glissement.

L'invention va maintenant être décrite en se référant au dessin annexé dans lequel :

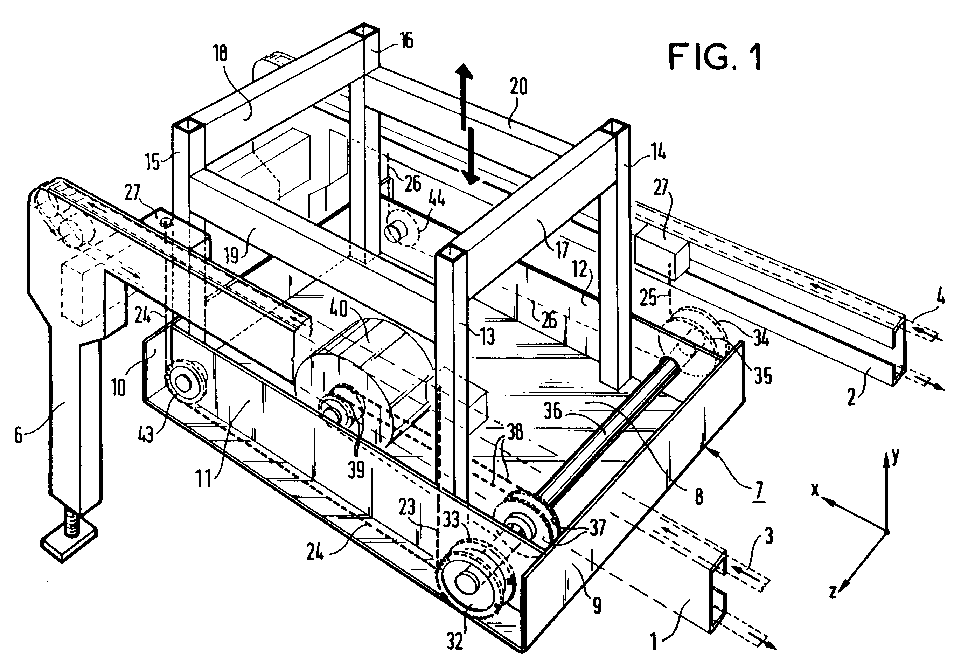

La figure 1 montre le dispositif selon l'invention en perspective.
La figure 2 montre le dispositif vue en élévation.
La figure 3 montre le dispositif en vue de-dessus.
La figure 4 montre le dispositif vu selon IV-IV de la figure 3.

A côté de chacune de ces figures, on a représenté un repère orthogonal X, Y, Z pour faciliter la description qui s'y réfère.

En se reportant à l'ensemble des figures, on voit représenté partiellement un convoyeur à chaînes.

Il comprend deux longerons 1 et 2 disposés parallèlement selon la direction X d'entraînement du convoyeur.

Deux chaînes d'entraînement 3, 4 sont supportées par ces longerons et leur déplacement le long de ces longerons, selon l'axe X, permet l'entraînement longitudinal d'une charge telle que 5 placée sur le convoyeur.

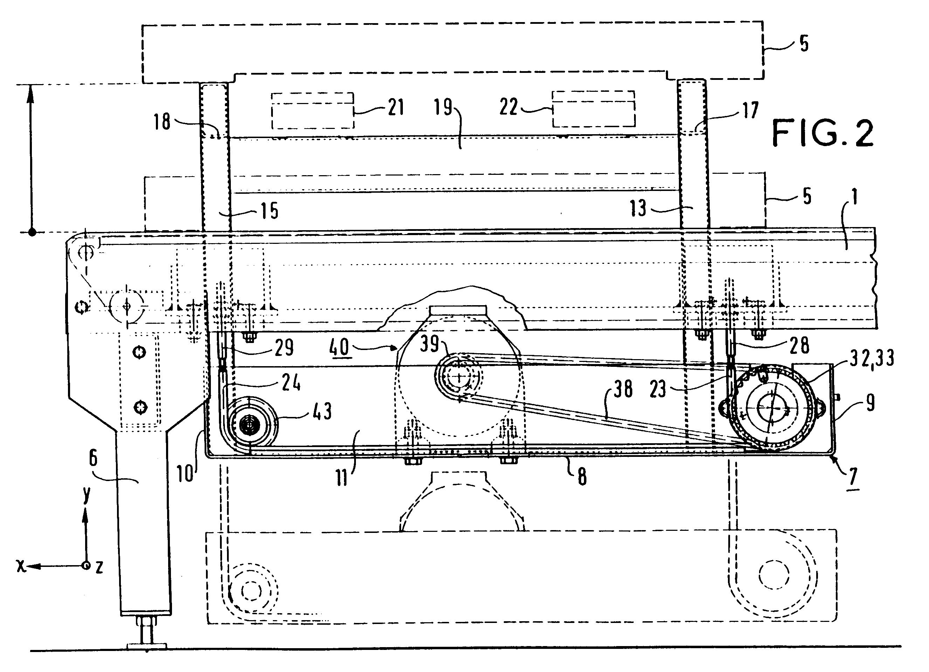

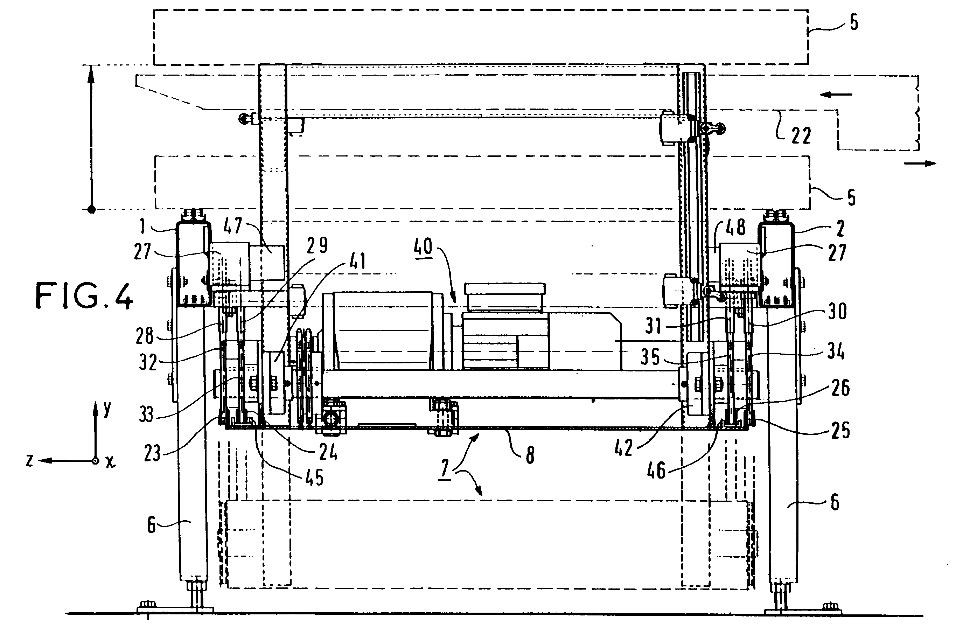

Sur les figures 2 et 4, cette charge 5 est représentée, d'une part reposant sur le convoyeur et d'autre part également en position élevée par le dispositif de levage associé au convoyeur tel que décrit ci-après.

Le convoyeur repose sur le sol par des pieds tels que 6.

Le dispositif de levage associé à ce convoyeur comporte une plateforme 7 qui est placée entre les deux longerons 1 et 2.

Cette plateforme forme une espèce de bac comportant un fond 8, deux côtés transversaux 9 et 10 et deux côtés longitudinaux 11 et 12.

Comme on le voit sur les figures, les côtés longitudinaux 11 et 12 sont un peu en retrait par rapport aux bords longitudinaux du fond 8.

Cette plateforme 7 est équipée d'une architecture de rehaussement composée de quatre colonnes verticales 13, 14, 15 et 16 dont les deux colonnes de l'avant 13 et 14 sont réunies à leur extrémité supérieure par une traverse 17 et les deux colonnes de l'arrière, par une traverse 18.

De même, les deux colonnes de chaque paire latérale de colonnes : la paire 13, 15 et la paire 14, 16 sont réunies par une poutre : respectivement 19 et 20. Cependant, ces poutres 19 et 20 ne réunissent les colonnes qu'à quelque distance de leur extrémité supérieure de façon à permettre, comme on le voit sur la figure 4 et mieux encore sur la figure 2, lorsque le dispositif de levage est en position haute, d'introduire transversalement selon Z des fourches 21 et 22 d'un appareil de manutention pour l'enlèvement de la charge 5.

Dans la position basse de la plateforme, l'extrémité supérieure des colonnes et des traverses 17, 18 est bien entendu, à un niveau inférieur à celui des chaînes d'entraînement 3 et 4 où, dans le cas d'un convoyeur à rouleaux, à un niveau inférieur à celui des génératrices inférieures des rouleaux.

En effet, le dispositif de levage peut être aussi bien associé à un convoyeur à rouleaux qu'à chaînes, mais bien entendu dans ce cas, l'architecture de rehausse ne comporte pas de pièces longitudinales telles que les poutres 19 et 20.

La plateforme 7 est suspendue au convoyeur par quatre chaînes 23, 24, 25 et 26. Les chaînes 23 et 24 ont une extrémité fixée au longeron 1 et les chaînes 25 et 26 au longeron 2.

La fixation à ces longerons est effectuée par l'intermédiaire de pièces de fixation 27 fixées aux longerons 1 et 2. De manière à bien régler la longueur des chaînes pour la mise à l'horizontal de la plateforme 7, les chaînes sont fixées à ces pièces de fixation 27 par l'intermédiaire de tiges filetées 28 à 31 et d'écrous. A leur autre extrémité, chaque chaîne est fixée à un pignon menant : la chaîne 23 à un pignon 32, la chaîne 24 à un pignon 33, la chaîne 25 à un pignon 34 et la chaîne 26 à un pignon 35. Les quatre pignons menants 32 à 35 sont fixés à un même arbre moteur 36 situé à l'avant de la plateforme et transversalement selon l'axe Z.

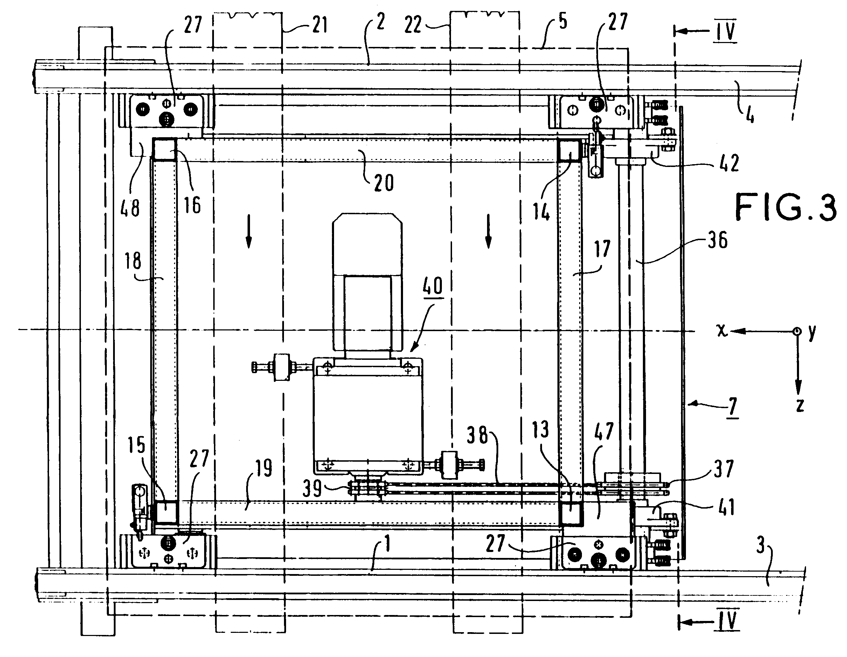

Cet arbre moteur 36 est en outre équipé d'un pignon moteur 37 relié par une chaîne 38 à un pignon de sortie 39 d'un ensemble moto-réducteur 40. L'arbre moteur 36 est supporté par la plateforme par des paliers 41 et 42 ( voir figure 3 et 4) montés sur les côtés longitudinaux 11 et 12 de la plateforme. Le groupe moto-réducteur 40 est fixé sur le fond 8 de la plateforme.

Les chaînes 23 et 25, accrochées de part et d'autre de la plateforme 7 aux pignons menants 32 et 34 montent directement selon un trajet vertical et sont accrochés respectivement aux longerons 1 et 2 par l'intermédiaire de pièces 27 et des tiges de réglage de longueur, 28 et 30.

En revanche, les chaînes 24 et 26 accrochées de part et d'autre de la plateforme 7 aux pignons menants 33 et 35 suivent d'abord un parcours horizontal selon l'axe X pour aller vers l'arrière de la plateforme où elles passent sur un pignon de renvoi, respectivement 43 et 44, avant de remonter à la verticale s'accrocher également par l'intermédiaire des tiges de réglage de longueur, 29 et 31 et des pièces de fixation 27 aux longerons 1 et 2. Lors de leur parcours horizontal, les chaînes 24 et 26 reposent sur le fond de la plateforme sur un chemin de glissement, respectivement 45 et 46, visibles sur la figure 4. Il s'agit d'une bande d'usure en matière synthétique.

Enfin, afin d'éviter, lors des manoeuvres de montée et de descente du dispositif, le balancement de l'ensemble, des patins de guidage 47 et 48 sont fixés aux pièces de fixation 27 d'accrochage des chaînes 23 et 26.

Ces patins de guidage 47 et 48 servent de guide pour les deux colonnes 13 et 16 situées en diagonale.

Sur les figures 2, 3 et 4, on a figuré en trait discontinu fin les fourches 21 et 22 d'un appareil de manutention pouvant prendre la charge 5 mise en position haute par le dispositif de levage.

Sur les figures 2 et 4, on a représenté partiellement, en trait discontinu fin, le système de levage en position basse.

Ainsi, le dispositif proposé est simple et s'adapte parfaitement à un convoyeur standard à rouleaux où à chaînes, il suffit d'y ajouter très simplement sur les longerons 1 et 2 des pièces de fixation 27 d'accrochage des chaînes de levage.

Le dispositif peut facilement coopérer avec un empileur de palettes à cliquets, le dispositif de levage venant apporter les palettes successives à empiler par le dessous en soulevant à chaque fois la pile de palettes déjà empilées.

## Revendications

1. Dispositif pour le levage d'une charge (5) disposée sur un convoyeur, ledit convoyeur comportant deux longerons (1, 2), parallèles à la direction d'entraînement du convoyeur et supportant des organes d'entraînement (3, 4) des charges déposées, le dispositif de levage comprenant une plateforme (7) située entre les deux dits longerons et équipée d'une architecture de rehaussement (13 à 20) destinée à supporter ladite charge (5) à élever et dont l'extrémité supérieure, dans la position basse de la plateforme (7), est située à un niveau inférieur à celui des dits organes d'entraînement, ladite plateforme étant reliée audit convoyeur par quatre chaînes (23 à 26) auxquelles elle est suspendue, caractérisé en ce qu'une extrémité de chaque chaîne est fixée à un longeron (1, 2) du convoyeur et en ce que l'autre extrémité de chaque chaîne est fixée à un pignon menant (32 à 35), les pignons menants étant accouplés à des moyens moteurs (40), l'ensemble pignons et moyens moteurs étant supporté par ladite plateforme (7).

2. Dispositif selon la revendication 1, caractérisé en ce que les quatre pignons menants (32 à 35) sont montés sur un unique arbre moteur (36) situé à l'avant de la plateforme perpendiculairement à la direction des dits longerons (1, 2), ledit arbre (36) portant à chacune de ses extrémités deux dits pignons menants (32, 33 et 34, 35) à chacun desquels est accrochée une chaîne dont l'une (23, 25) subit un simple trajet vertical et vient s'accrocher au longeron correspondant et dont l'autre (24, 26) subit un premier parcours horizontal, parallèle aux longerons (1, 2), pour passer sur un pignon de renvoi (43, 44) situé à l'arrière de la plateforme, puis de là, un deuxième parcours vertical pour venir s'accrocher au longeron, la chaîne, le long de son parcours horizontal reposant sur le fond de la plateforme, sur un chemin de glissement (45, 46).

3. Dispositif selon l'une des revendications 1 ou 2, caractérisé en ce que ladite architecture de rehaussement comprend quatre colonnes verticales (13 à 16), deux colonnes (13, 14) à l'avant de la plateforme et deux colonnes (15, 16) à l'arrière de la plateforme, les deux colonnes de l'avant étant réunies à leur extrémité supérieure par une traverse (17) ainsi que les deux colonnes (15, 16) situées à l'arrière de la plateforme.

4. Dispositif selon la revendication 3, caractérisé en ce que au moins deux colonnes (13, 16) situées en diagonale sont guidées lors du mouvement de montée et de descente du plateau par des patins de guidage (47, 48) liés aux longerons (1, 2).

5. Dispositif selon l'une des revendications 3 ou 4, caractérisé en ce que à quelque distance de leur extrémité supérieure, les deux colonnes de chaque paire latérale de colonnes sont réunies par une poutre (19, 20).

6. Dispositif selon l'une des revendications précédentes, caractérisé en ce que chaque chaîne est fixée à un longeron par l'intermédiaire d'une tige filetée (28 à 31) permettant un réglage de la longueur de chaîne, et d'une pièce de fixation (27).

## Claims

1. Device for lifting a load (5) disposed on a conveyor, said conveyor including two longitudinal members (1, 2) parallel to the direction in which the conveyor is driven and supporting members (3, 4) for driving along said conveyor loads deposited thereon, the lifting device including a platform (7) situated between said two longitudinal members and equipped with a lifting architecture (13 to 20) adapted to support said load (5) to be lifted and the top of which, in the bottom position of the platform (7), is at a level lower than said drive members, said platform being connected to said conveyor by four chains (23 to 26) from which it is suspended, characterised in that one end of each chain is fixed to a longitudinal member (1, 2) of the conveyor, the other end of each chain is fixed to a driving sprocket wheel (32 to 35), the driving sprocket wheels are coupled to drive means (40) and the combination of the sprocket wheels and the drive means is supported by said platform (7).

2. Device according to claim 1 characterised in that the four driving sprocket wheels (32 to 35) are mounted on a single drive shaft (36) at the front of the platform and perpendicular to the direction of said longitudinal members (1, 2), said shaft (36) carries at each end two of said driving sprocket wheels (32, 33 and 34, 35) to each of which is coupled a chain one of which (23, 25) runs vertically and is attached to a corresponding longitudinal member and the other of which (24, 26) initially runs horizontally parallel to the longitudinal members (1, 2), then passes around a sprocket wheel (43, 44) at the rear of the platform, and then runs vertically before being attached to the longitudinal member, the horizontal chain runs resting on the bottom of the platform on respective sliding paths (45, 46).

3. Device according to claim 1 or claim 2 characterised in that said lifting architecture comprises four vertical columns (13 to 16), two columns (13, 14) at the front of the platform are joined at the top by a crossmember (17) and two columns (15, 16) at the rear of the platform are joined at the top by a crossmember (18).

4. Device according to claim 3 characterised in that at least two columns (13, 16) in diagonal relationship to each other are guided on up and down movement of the platform by guide shoes (47, 48) joined to the longitudinal members (1, 2).

5. Device according to claim 3 or claim 4 characterised in that at a short distance from the top the two columns of each lateral pair of columns are joined together by a beam (19, 20).

6. Device according to any one of the preceding claims characterised in that each chain is fixed to a longitudinal member by a fixing part (27) and a screwthreaded rod (28 to 31) for adjusting the length of the chain.

## Patentansprüche

1. Vorrichtung zum Anheben einer Last (5), die auf einem Fördersystem liegt, wobei das Fördersystem zwei Längsbalken (1, 2) parallel zur Förderrichtung besitzt und Antriebsorgane (3, 4) zum Fördern der aufgelegten Lasten tragt und wobei die Hubvorrichtung eine Plattform (7) zwischen den beiden Längsbalken sowie einen Aufbau (13 bis 20) besitzt, der die anzuhebende Last (5) tragen soll und dessen oberes Ende in der unteren Stellung der Plattform (7) unterhalb des Niveaus der Antriebsorgane liegt, und wobei die Plattform über vier Ketten (23 bis 26), an denen sie hängt, mit dem Fördersystem verbunden ist, dadurch gekennzeichnet, daß ein Ende jeder Kette an einem Längsbalken (1, 2) des Fördersystems und das andere Ende jeder Kette an einem Antriebsritzel (32 bis 35) befestigt ist, wobei die Antriebsritzel an Motormittel (40) gekoppelt sind und die Einheit aus Ritzeln und Motormitteln von der Plattform (7) getragen wird.

2. Vorrichtung nach Anspruch 1, dadurch gekennzeichnet, daß die vier Antriebsritzel (32 bis 35) auf einer gemeinsamen Motorwelle (36) montiert sind, die sich vorne auf der Plattform senkrecht zur Richtung der Längsbalken (1, 2) erstreckt, daß die Welle (36) an jedem ihrer Enden zwei Antriebsritzel (32, 33; 34, 35) trägt, an denen je eine Kette angehängt ist, von denen eine (23, 25) einen einfachen vertikalen Verlauf nimmt und am entsprechenden Längsbalken angehängt ist, während die andere Kette (24, 26) zuerst waagrecht, parallel zu den Längsbalken (1, 2) verläuft, um dann über ein Umlenkritzel (43, 44) im hinteren Bereich der Plattform und schließlich entlang einer zweiten senkrechten Strecke zum Längsbalken zu verlaufen, wobei die Kette entlang ihres waagrechten Verlaufs auf dem Boden der Plattform gemäß einem Gleitweg (45, 46) aufliegt.

3. Vorrichtung nach einem der Ansprüche 1 oder 2, dadurch gekennzeichnet, daß der Aufbau vier senkrechte Säulen (13 bis 16) aufweist, nämlich zwei Säulen (13, 14) am vorderen Ende der Plattform, und zwei Säulen (15, 16) am hinteren Ende der Plattform, daß die beiden vorderen bzw. hinteren Säulen (13, 14; 15, 16) an ihrem oberen Ende je durch einen Querbalken (17, 18) verbunden sind.

4. Vorrichtung nach Anspruch 3, dadurch gekennzeichnet, daß mindestens zwei Säulen (13, 16), die sich diagonal gegenüberliegen, während der Hub- und Absenkbewegung der Plattform durch mit den Längsbalken (1, 2) verbundene Gleitorgane (47, 48) geführt werden.

5. Vorrichtung nach einem der Ansprüche 3 oder 4, dadurch gekennzeichnet, daß die beiden Säulen jedes seitlichen Säulenpaars je durch einen Balken (19, 20) miteinander verbunden sind, der sich in einem gewissen Abstand vom oberen Ende der Säulen befindet.

6. Vorrichtung nach einem der vorhergehenden Ansprüche, dadurch gekennzeichnet, daß jede Kette über einen Gewindeschaft (28 bis 31), der eine Einstellung der Länge der Kette erlaubt, und ein Befestigungselement (27) an einem Längsbalken befestigt ist.
